# EUROPÄISCHE PATENTANMELDUNG

(11) **EP 3 796 270 A1**
(43) Veröffentlichungstag der Anmeldung: **24.03.2021**
(21) Anmeldenummer: 20197027.4
(22) Anmeldetag: 18.09.2020
(51) Int. Cl.: G07C 1/24, H04W 56/00

(54) **SYSTEM UND VERFAHREN ZUM AUSBILDEN EINES FERNNETZWERKS**

(30) Priorität: 20.09.2019 DE 102019125457; 01.10.2019 LU 101415
(71) Anmelder: Hund, Christian, 83673 Bichl (DE)
(72) Erfinder: Hund, Christian, 83673 Bichl (DE)
(74) Vertreter: Klemm, Rolf

(57) **Zusammenfassung**

Es wird ein System (1) zur hochgenauen Zeitmessung mit mindestens zwei Netzgeräten (2, 3, 4, 5), die ein Fernnetzwerk (6) ausbilden, wobei die Netzgeräte (2, 3, 4, 5) jeweils einen Mikrocomputer (7) mit Speicher, ein Steuer- und Auslesemodul (8) und einen Fernnetz-Sendeempfänger (9), eine quarzgesteuerte Systemuhr (12, 13, 14, 15), einen Energiespeicher (11), sowie Schnittstellen (21, 22, 23, 24) zur kabelgebundenen und kabellosen Signal- und bidirektionalen Datenübertragung und Energieübertragung (25) zum Aufladen des Energiespeichers (11) umfassen, wobei die Netzgeräte ein eigenständiges autarkes, mobil aufstellbares, kabelloses Fernnetzwerk ausbilden.

## Beschreibung

### Hintergrund

Hier werden ein System und ein Verfahren, insbesondere zur hochgenauen Zeitmessung, zum Ausbilden eines Fernnetzwerks beschrieben.

### Stand der Technik

Es ist ein mobiles, autarkes, kabelgebundenes Fernnetzwerk zur hochgenauen Zeitmessung zum Beispiel für Skiabfahrtsrennen mit einer Übertragungsgenauigkeit zwischen mehreren Messstationen, das heißt einer Startstation, einer Zielstation und Zwischenstationen, von 1/100 sec. bekannt. Bislang erreichen nur kabelbasierte Lösungen diese hohe Genauigkeit. Kabellose Übertragungsverfahren weisen eine bislang unkalkulierbare, stets veränderliche Übertragungsverzögerung aus Verarbeitungszeit und Funkübertragungszeit und Ungenauigkeiten in der Laufzeit zwischen verschiedenen Uhren der Sender und Empfänger auf. Deshalb ist ausschließlich die auf Übertragungskabeln basierte Technologie insbesondere für internationale Wettkämpfe nach (Föderation Internationale de Ski) FIS-Regeln zur Zeitmessung zugelassen.

Es ist ein System mit mindestens einem lokalen WLan Kommunikationsnetzwerk mit mehreren Netzwerkgeräten nach dem Standard IEEE 802.11 zur Zeitmessung im Sport bekannt. Die Reichweite beträgt hier in der Regel ca. 10-50 Meter nach dem Standard IEEE 802.11. Eine Ausweitung der Reichweite des lokalen WLan-Kommunikationsnetzwerks ist möglich, in dem die Netzwerkgeräte über ein zweites lokales WLan-Kommunikationsnetzwerk jeweils einen Zugangspunkt für ein eigenes zweites lokales WLan-Netzwerk nach dem Standard IEEE 802.11 für weitere gleiche oder gleichartige Netzwerkgeräte bilden. Somit könnten erfasste Daten über weitere Strecken im Nah-Netzwerk durch die Netzwerkgeräte geteilt werden, in dem Signale und Daten aus einem ersten WLan-Nah-Netzwerk in ein zweites WLan-Nah-Netzwerk im Netzwerkgerät übergeben werden. Ein derartiges System wird in der EP 3 012 987 beschrieben.

### Zu lösendes Problem

Aufgabe ist es, ein System und Verfahren zur hochgenauen Wettkampfzeiterfassung über größere Distanzen von einigen 100m zwischen einer Startstation und einer Zielstation im sehr hohen Auflösungsbereich mit einer leichten Handhabbarkeit und einem einfachen, autarken Aufbau zu schaffen.

### Lösung, Vorteile und Ausgestaltung

Gelöst wird die Aufgabe mit dem Gegenstand der Ansprüche 1, 7 und 8. Vorteilhafte Ausführungen sind in den Unteransprüchen beschrieben.

Es wird hier ein System, insbesondere zur hochgenauen Zeitmessung, mit mindestens zwei Netzgeräten beschrieben, die ein autarkes, mobil aufstellbares, kabelloses Fernnetzwerk ausbilden, wobei die Netzgeräte jeweils einen Mikrocomputer mit Speicher, mit einem Steuer- und Auslesemodul und einem Fernnetz-Sendeempfänger, eine quarzgesteuerte Systemuhr, einen Energiespeicher, sowie Schnittstellen zur kabelgebundenen und kabellosen Signal- und bidirektionalen Datenübertragung und Energieübertragung zum Aufladen des Energiespeichers umfassen.

Autark bedeutet, dass eine weitere, externe Energiequelle außerhalb des Netzgeräts zum Betrieb nicht zwingend notwendig ist und festinstallierte Basisstationen zur Schaffung eines Fernnetzwerkes für das Ausbilden des Fernnetzwerks nicht zwingend notwendig sind. Mobil aufstellbar bedeutet, dass eine Aufstellung einfach mit wenigen Handgriffen durchführbar ist, also eine stationäre dauerhafte Installation entfällt und nicht notwendig ist.

Hochgenaue Zeitmessung heißt, dass ein Messfehler der Zeitmessung zwischen den Netzgeräten und dem ausgegebenen Ergebnis der Zeitmessung kleiner als 1/100 sec. ist, also das Ergebnis der Zeitmessung eines Laufs ausgeführt von einem Athleten von einer Startstation zur Zielstation bevorzugt mindestens 1/100 sec. genau ist. Fernnetzwerk heißt, dass eine Reichweite zwischen den einzelnen Netzgeräten mehrere 100m bis mehrere Km z.B. 30 Km erreichen kann.

Es wird hier ein Verfahren zum Herstellen eines Systems, insbesondere zur hochgenauen Zeitmessung, mit mindestens zwei Netzgeräten beschrieben, , wobei die Netzgeräte jeweils einen Mikrocomputer mit Speicher, ein Steuer- und Auslesemodul und einen Fernnetz-Sendeempfänger, eine quarzgesteuerte Systemuhr, einen Energiespeicher, sowie Schnittstellen zur kabelgebundenen und kabellosen Signal- und bidirektionalen Datenübertragung umfassen, wobei das Steuermodul derart eingestellt wird, das eine Reihenfolge zur Synchronisierung der Systemuhr von einem Master-Netzgerät mit weiteren Endnetzgeräten festgelegt wird.

Ferner wird ein Verfahren zum Betreiben eines Systems, insbesondere zur hochgenauen Zeitmessung, mit mindestens zwei Netzgeräten beschrieben, die ein autarkes, mobil aufstellbares, kabelloses, sternförmiges Fernnetzwerk ausbilden, wobei die Netzgeräte jeweils einen Mikrocomputer mit Speicher, ein Steuer- und Auslesemodul und einen Fernnetz-Sendeempfänger, eine quarzgesteuerte Systemuhr, einen Energiespeicher, sowie Schnittstellen zur kabelgebundenen und kabellosen Signal- und bidirektionalen Datenübertragung umfassen, wobei eines der Netzgeräte als Master-Gerät mit Daten-Server und alle weiteren Netzgeräte als Client-Endnetzgeräte ausgebildet sind und alle Endnetzgeräte permanent aktiv mit einem geöffneten Empfangszeitfenster betrieben werden, wobei eine Zeitsteuervorrichtung, in Form einer Zeitscheibe, integriert ist, mit der eine direktionale Datenübertragung mit einem definierten Sendezeitlänge innerhalb eines Sendefensters und einer festgelegten Reihenfolge von Sendefenstern der Netzgeräte permanent wiederholend durchgeführt wird.

Somit ist ein System und Verfahren zur hochgenauen Zeitmessung geschaffen, die mittels einer kabellosen Fernnetzwerk-Technologie einen leichten autarken Aufbau ermöglichen.

### Kurzbeschreibung der Zeichnungen

Mögliche Ausführungen werden nun anhand der beigefügten schematischen Darstellungen näher erläutert, von denen zeigen:
- Fig. 1: eine schematische Ansicht eines Systems zur hochgenauen Zeitmessung;
- Fig. 2: eine vergrößerte schematische Detailansicht eines Netzgeräts;
- Fig. 3: ein schematischer Ablauf von einer Zeitsteuervorrichtung; und
- Fig. 4: ein Kalibrierungs-Quarz-Kennlinien-Zeitdiagramm einer Systemuhr des Master-Netzgeräts und eines Endnetzgeräts.

### Detaillierte Beschreibung der Zeichnungen

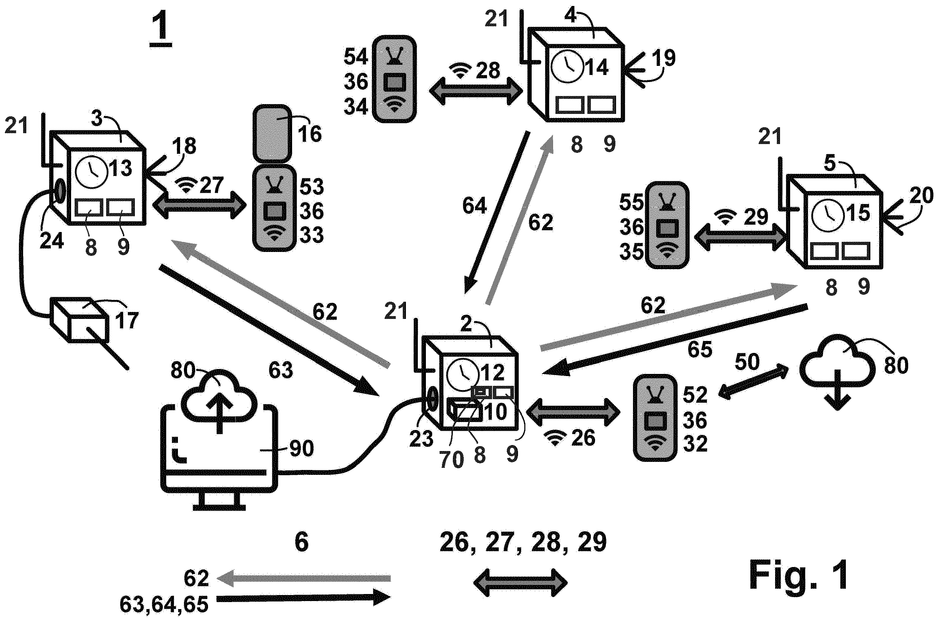

Die Fig. 1 zeigt ein System 1 zur hochgenauen Zeitmessung mit mindestens vier Netzgeräten 2, 3, 4, 5, die ein autarkes, mobil aufstellbares, kabelloses Fernnetzwerk 6 ausbilden. Der Ausdruck autark umfasst ein eigenständiges unabhängiges Fernnetzwerk 6. Das Fernnetzwerk 6 ist frei von herkömmlich bekannten stationären GPRS-GSM- oder ähnlichen Mobilfunksystem-Infrastrukturen mit zwingend erforderlichen stationären Basisstationen. Es bedarf also einer bekannten Mobilfunkstruktur für das System 1 und dessen Verfahren zum Betrieb vorteilhafterweise nicht. Das Fernnetzwerk eigenständig mit einem Frequenzgang als Schmalband ausgebildet, insbesondere in Ultra-Schmalband-Technologie. Dies hat die Vorteile, dass extrem hohe Funkreichweiten mit geringem Energieverbrauch realisierbar sind.

Ferner ist das Fernnetzwerk eigenständig mit einem Frequenzgang als Schmalband, insbesondere als Ultra-Schmalband und mit Funksignalen mit einem Verfahren einer Zirpenfrequenzspreizmodulation (CSS Chirp Spread Spectrum) ausgebildet. Ein Zirpen (Chirp)-Impuls beschreibt einen sinusförmigen Signalverlauf, welcher über die Zeit in der Frequenz kontinuierlich ansteigt bzw. abfällt. Dieser Signalverlauf ist im Rahmen von CSS als ein elementarer Sendeimpuls, welcher ein Symbol darstellt. Die Datenübertragung geschieht durch eine zeitliche Aneinanderreihung einer Folge auf- und absteigender Chirp-Impulse, welche in der Norm als "Sub-Chirp" bezeichnet werden.

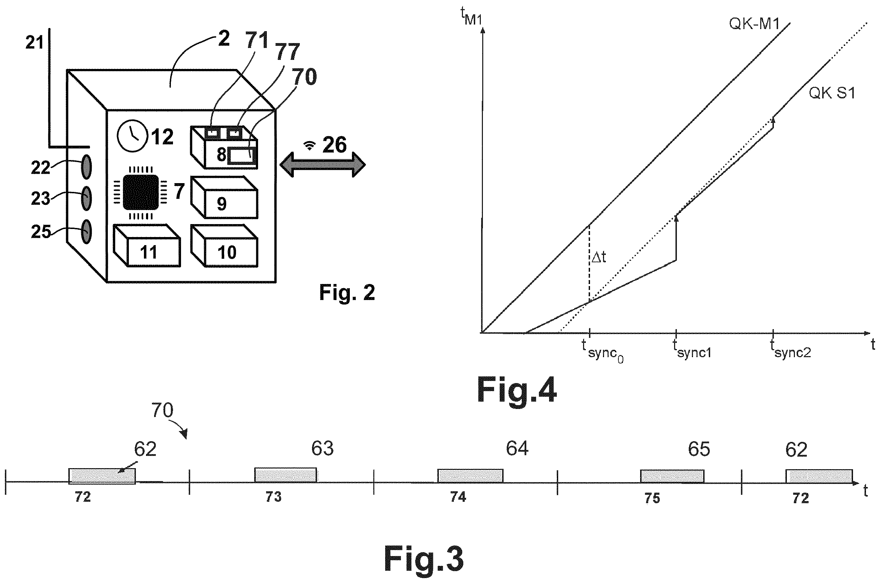

Die Fig. 1 und 2 zeigen abstrahiert, dass die Netzgeräte 2, 3, 4, 5 gleich aufgebaut sind und jeweils einen Mikrocomputer 7 mit Speicher, ein Steuer- und Auslesemodul 8 und einen Fernnetz-Sendeempfänger 9, eine quarzgesteuerte Systemuhr 12, 13, 14, 15, einen Energiespeicher 11, sowie Schnittstellen 21, 22, 23, 24, zur kabelgebundenen und kabellosen Signal- und bidirektionalen Datenübertragung und Energieübertragung 25 zum Aufladen des Energiespeichers 11 umfassen. Die kabelgebundenen und kabellosen Schnittstellen sind im Folgenden detaillierter beschrieben. Eine erste kabellose Schnittstelle 21 ist für das kabellose Fernnetzwerk 6 ausgebildet ist.

Der Mikrocomputer 7 ist beispielsweise aus einer 32-Bit-Mikrocontrollerfamilie und hat bereits eine Systemuhr 12 verbaut. Ebenso kann die Schnittstelle 22 für ein WLan-Nah-Netzwerk 26-29 bereits im Mikrocomputer 7 integriert sein. Der Energiespeicher 11 umfasst bevorzugt einen Lithium-Akkumulator mit einer entsprechenden Lade- und Tiefentladungsschutzsteuerung. Weiterbevorzugt umfasst der Energiespeicher 11 einen Lithium-Polymer-Akkumulator. Der Vorteil eines derartigen Akkus ist, dass dieser besonders leicht und somit leicht tragbar für das mobile Master-Netzgerät 2, sowie die weiteren Endnetzgeräte 3, 4, 5 ist. Somit ist das System 1 beispielsweise in einer Reisetasche leicht und kompakt transportierbar.

Um eine effektive und schnelle Kommunikationsstruktur im System 1 zu schaffen, ist eines der Netzgeräte 2, 3, 4, 5 als Master-Netzgerät 2 mit einem Daten-Server 10 und alle weiteren Netzgeräte 3, 4, 5 als Client-Endnetzgeräte 3, 4, 5 ausgebildet sind. Somit sind erfasste Zeitwerte und eine Datenbank auf dem Daten-Server 10 in dem Netzgerät 2 der vier gleich aufgebauten Netzgeräte 2, 3, 4, 5 als führend für das System 1 konzentriert. Die Datenbank im Daten-Server 10 wird auf die anderen Netzgeräte 3, 4, 5 laufend gespiegelt, so dass diese Daten auch dort lokal über lokale Nah-Netzwerke 26, 27, 28, 29 der Netzgeräte 2, 3, 4, 5 abrufbar sind. Das Master-Netzgerät 2 hat dabei die primär bindenden Daten.

Vorteilhafterweise ist das System 1 mit einer Netzarchitektur des Fernnetzwerks 6 sternförmig ausgebildet, um die Kommunikationswege zu verkürzen zwischen Master-Netzgerät 2 und Client-Endnetzgeräten 3, 4, 5. Das Steuermodul 8 ist mit einer unten beschriebenen Zeitsteuervorrichtung 70 zur direktionalen Datenübertragung 62-65 ausgebildet.

Um möglichst ressourcenschonend das System 1 auszuführen, ist das System 1 mit einem energiesparsamen Datenprotokoll 62, 63, 64, 65 mit einer niedrigen Datenübertragungsrate, insbesondere zwischen 292 bit/s bis 50 KBit/s, einem sogenannten "Low Power Wireless Network Protocol", vorzugsweise von einem sogenannten "LoRa"-Fernnetzwerk, engl. "Long Range Wide Area Network", für kabellose Fern-Datenübertragungen mit Reichweiten von mehr als 200m bis über mehrere km, z.B. 30 km, ausgebildet. Hierzu sind Bauteile und Modul aufgrund neuester, technischer Entwicklungen seit kurzer Zeit verfügbar. Ein LoRa-Fernnetzwerk 6 arbeitet insbesondere im Frequenzbereich von unter 1GHz, bevorzugt im Bereich von 433,05 MHz bis 928 MHz, je nach Jurisdiktion und Kontinent. Der Frequenzbereich von LoRa ist anmeldungs- und lizenzfrei. Der Strombedarf in Netzgeräten 2, 3, 4, 5 liegt zwischen ca. 10 mA und 100 nA im Ruhemodus. LoRa ist von der Firma Semtech Corporation entwickelt worden. LoRa verwendet - atypisch für ein Fernnetzwerk - das Übertragungsprotokoll mit dem Standard IEEE 802.15.4a. Dieses Protokoll ist primär für Nah-Netzwerke entwickelt worden. Die Datenmengen sind sehr klein und die Interferenzstörungsfestigkeit ist sehr hoch. Die Frequenzspreizung schafft eine hohe Effizienz bei Datentransfer und im Energieverbrauch. Interferenzen sind dadurch minimiert. Eine Datentransferrate zum Endgerät passt der Netzserver d.h. das Master-Netzgerät 2 je nach Bedarf automatisch an (ADR = Adaptive Data Rate). Außerdem ist die Kommunikation im LoRaWAN zweifach mit 128 bit AES verschlüsselt, einmal bis zum Master Netzgerät 2 und zum anderen bis zum Client-Endnetzgerät.

Um das System 1 zum Beispiel für eine Zeitmessung für ein Wettkampf- oder Skirenntraining oder einen Skiwettkampf weiterzubilden, ist ein Netzgerät 2, insbesondere das Master-Netzgerät 2 mobil tragbar ausgebildet, und weitere Client-Endnetzgeräte 3, 4, 5 mit jeweils einem induktiven, optischen oder elektromechanischen Signal- bzw. Datengeber, als Startstation 3, Zielstation 4 und Zwischenstation 5 sind autark, temporär stationär vorzugsweise mit einem Gestänge aufstellbar.

Die Fig.1 zeigt die Startstation 3 mit einem elektromechanischen Taster 17, der als Startsignal-Datengeber mittels einer stecksicheren ersten Schnittstelle 24 am Client-Endnetzgerät 3 über Kabel angeschlossen ist. Beim Start wird der elektromechanische Taster 17 vom Athleten geschwenkt und gibt ein Startsignal an den Mikrocomputer 7 ab. Alternativ kann die Startstation 3 mit einem optischen Signalgeber 20 ausgestattet sein.

Die Startstation, die Zielstation 4 und die Zwischenstation 5 haben als optische Signalgeber jeweils eine aus dem Stand der Technik bekannte Lichtschranke 18, 19, 20 vorzugsweise eingebaut. Bei Unterbrechung der Lichtschranke 18, 19, 20 wird ein Signal an den Mikrocomputer 7 zur Verarbeitung abgegeben.

Die Netzgeräte 2, 3, 4, 5 des Systems 1 weisen eine zweite kabellose Schnittstelle 22 auf, die als Zugangspunkt für jeweils ein eigenes lokales Nah-Netzwerk 26, 27, 28, 29, insbesondere mit einer Funk-Reichweite im 10-50 Meterbereich, ausgebildet ist. Dieses lokale Nah-Netzwerk 26, 27, 28, 29 ist vorzugsweise ein aus dem Stand der Technik bekanntes standardisiertes Netzwerk, wie beispielsweise ein WLan nach IEEE 802.11x Standard.

Die Fig. 1 bis 4 veranschaulichen auch ein Verfahren zum Herstellen eines Systems 1 zur hochgenauen Zeitmessung mit mindestens zwei Netzgeräten 2, 3, 4, 5, die ein autarkes, mobil aufstellbares, kabelloses Fernnetzwerk 6 ausbilden, wobei die Netzgeräte 2, 3, 4, 5 jeweils einen Mikrocomputer 7 mit Speicher, mit einem Steuer- und Auslesemodul 8 und einem Fernnetz-Sendeempfänger 9, einer quarzgesteuerten Systemuhr, einen Energiespeicher, sowie Schnittstellen zur kabelgebundenen und kabellosen Signal- und bidirektionalen Datenübertragung umfassen, wobei das Steuermodul 8 derart eingestellt wird, das eine Reihenfolge zur Synchronisierung der Systemuhr 12, 13, 14, 15 von einem Master-Netzgerät 2 mit weiteren Endnetzgeräten 3, 4, 5 festgelegt wird.

Hierfür wird das Steuermodul 8 über eine zweite kabelgebundene Schnittstelle 23, z.B. eine standardisierte USB-Schnittstelle, von einem externen Rechner 90 voreingestellt. Die Fig. 3 zeigt diese Reihenfolge und wird unten beschrieben.

Das LoRa-Netzwerk 6 bietet grundsätzlich drei verschieden bidirektionale Kommunikationsvarianten der Endnetzgeräte mit dem Master-Netzgerät an. Um eine besonders effiziente hochgenaue Zeitmessung zu erzielen, wird das Verfahren wie folgt betrieben.

Das Verfahren zum Betreiben des Systems 1 zur hochgenauen Zeitmessung mit mindestens zwei Netzgeräten 2, 3, 4, 5, die ein autarkes, mobil aufstellbares, kabelloses, sternförmiges Fernnetzwerk 6 ausbilden, wobei die Netzgeräte jeweils einen Mikrocomputer mit Speicher, mit einem Steuer- und Auslesemodul 8 und einem Fernnetz-Sendeempfänger 9, einer quarzgesteuerten Systemuhr, einen Energiespeicher, sowie Schnittstellen zur kabelgebundenen und kabellosen Signal- und bidirektionalen Datenübertragung umfassen, wobei eines der Netzgeräte als Master-Netzgerät 2 mit Daten-Server 10 und alle weiteren Netzgeräte als Client-Endnetzgeräte 3, 4, 5 ausgebildet sind, umfasst die Schritte, dass alle Endnetzgeräte 2, 3, 4, 5 permanent aktiv mit einem geöffneten Empfangszeitfenster betrieben werden, wobei eine Sendezeitsteuervorrichtung 70 im Steuermodul 8, auch als Zeitsteuerscheibe bezeichenbar, integriert ist, mit der eine direktionale Datenübertragung im Fernnetzwerk 6 mit einer definierten, insbesondere gleich langen Sendezeitlänge 62, 63, 64, 65 innerhalb eines Sendefensters 72, 73, 74, 75 und einer festgelegten Reihenfolge von Sendefenstern 72, 73, 74, 75 der Netzgeräte 2, 3, 4, 5, wie in der Fig. 4 gezeigt ist, permanent wiederholend durchgeführt wird. Die Datenübertragungen 62-65 sind bei einer makroskopischen Betrachtung einer einzigen gesamten Reihenfolge der Sendefenster 72-75 als bidirektionale Datenkommunikation zu beschreiben. Somit wird ein Gitter auf diese Kommunikationsvariante des LoRa-Fernnetzwerks gelegt. Das Master-Netzgerät 2 empfängt alle Datenübertragungen 63-65 und verarbeitet diese. Die Netzwerkgeräte 3, 4, 5 filtern empfangenen Datenübertragungen 62-65 von den jeweilig anderen Netzwerkgeräten 2, 3, 4, 5, ob diese für sie selbst jeweils bestimmt sind oder nicht. Sind diese nicht für das entsprechende Netzgerät 2, 3, 4, 5 bestimmt, so wird die Datenübertragung ignoriert andernfalls beachtet und verarbeitet.

Es versteht sich, dass das oben beschriebene Verfahren zum Betreiben des Systems 1 auch für andere Anwendungen nicht nur zur hochgenauen Zeitmessung, sondern auch für Überwachungen oder Datenübertragungen jeglieher Art mit einer hohen Übertragungsreichweite von mehreren hundert Meter bis mehreren km sehr effektiv aufgrund der Sendezeitsteuervorrichtung 70 sein kann.

Die Fig. 3 zeigt die Reihenfolge von großen Sendefenster 72-75 mit Sendezeitlängen 62 bis 65, die im Millisekunden (ms) Bereich, insbesondere im Bereich von unter 500 ms. liegen. Innerhalb der Sendefenster 72 bis 75 kann innerhalb eines kleineren Sendezeitfensters, die eigentliche direktionale Datenübertragung mit den kleinen Sendezeitlängen 62, 63, 64, 65 von unter 300 ms. erfolgen, so dass eine Pufferzeit zwischen den einzelnen Datenübertragungen 62-63 erfolgt.

Nach einem weiterbildenden Verfahren, um eine hochgenaue Zeitmessung zu erzielen, wird die exakte Zeit jeweils von der Systemuhr 13, 14, 15 von den Endnetzgeräten 3, 4, 5 auf die Systemzeit der Systemuhr 12 vom Master-Netzgerät 2 synchronisiert. Hierfür wird insbesondere ein Übertragungszeitfehler entstehend aus Rechnerverarbeitungszeit im jeweiligen Netzgerät und Funkübertragungszeit aus, vorzugsweise sechs, Wiederholungen der Synchronisierung gemittelt, und der gemittelte Übertragungszeitfehler wird in die ermittelte Zeitdifferenz Δt einbezogen. Eine individuelle Zeitdifferenz Δt zwischen der Systemuhr 12 des Master-Netzgeräts 2 und jeder einzelnen Systemuhr 13, 14, 15 der Endnetzgeräte 3, 4, 5 wird ermittelt, und danach die Systemuhren 13, 14, 15 an der Systemuhr 12 des Master-Netzgeräts 2 synchronisiert, so dass jeweils Differenzlaufzeiten zwischen der führenden Systemuhr 12 und den jeweiligen Systemuhren 13, 14, 14 der Endnetzgeräte 3, 4, 5 mit einer Genauigkeit von unter 1/100 sec. erreicht werden.

Um eine Messgenauigkeit des Systems 1 von 1/100 sec. über einen längeren Zeitraum von mehreren Stunden zu erzielen, ist das Verfahren derart weitergebildet, dass eine Quarz-Kennlinie QK-S1 von jeder Systemuhr 13, 14, 15 in jedem Endnetzgerät 3, 4, 5 mit der Quarz-Kennlinie QK-M1 der Systemuhr 12 des Master-Netzgeräts 2, insbesondere nach einer definierten Betriebszeit, beispielsweise von unter 20 min. Betriebszeit, des Systems 1, weiterbevorzugt nach 10 min. Betriebszeit, in definierten Intervallen, insbesondere von 1 min., kalibriert wird. Da die Quarz-Systemuhren 12-15 in den Netzgeräten 2-5 jeweils pro Stunde ca. 3/100 sec. aufgrund verschiedener Quarz-Kennlinien auseinander driften können, addieren sich diese Differenzzeiten bei einem Mobilen-Master-Netzgerät 2, einer Startstation 3 und einer Zielstation 4 insgesamt bis zu einer ca. 6/100 sec./h möglichen Gangdifferenz der jeweiligen Systemuhren zueinander. Die jeweilige Gangdifferenz an den Systemuhren 13, 14, 15 der Endnetzgeräte muss mit der zentralen Master-Systemuhr 12 kalibriert werden, um die geforderte hohe Messgenauigkeit wie bei einem Kabelfernnetz gemäß des Stands der Technik zu erzielen. Dieses Kalibrierungsverfahren ist mit der Fig. 3 dargestellt, Die X-Achse t stellt die tatsächliche Zeit dar und die Y-Achse die ideale Zeit t_{M1}. Die oben beschriebene Synchronisierung erfolgt zur Kalibrierung in Intervallen t_{sync0}, t_{sync1}, t_{sync2} z.B. von 1 min., bis die Quarz-Kennlinie QK-S1 der Quarz-Kennlinie QK-M1 in einem hinreichend genauen Auflösungsbereich entspricht.

Das Steuer- und Auslesemodul 8 jedes Netzwerkgeräts 2, 3, 4, 5 umfasst somit jeweils eine Zeitsteuervorrichtung 70, eine Synchronisierungsvorrichtung 71 zur Synchronisierung der Systemuhren 12, 13, 14, 15 und eine Kalibrierungsvorrichtung 77. Das Steuer- und Auslesemodul 8 jedes Client-Netzwerkgeräts 3, 4, 5 synchronisiert und kalibriert die jeweilige eigene Systemuhr 13, 14, 15 mit der Systemuhr 12 des Master-Netzwerkgeräts 2.

Um das Verfahren im Kommunikationsbereich noch effizienter zu gestalten, wird beim Betriebsbeginn des Systems 1 folgender Verfahrensschritt eingeführt, dass ein Netzgerät 5 einer Zwischenstation 5 aus der Reihenfolge der Sendefenster der Sendezeitsteuervorrichtung 70 entfernt wird, wenn keine Rückmeldung einer Datenübertragung 65 vom Netzgerät 5 der Zwischenstation an das Master-Netzgerät 2 innerhalb eines definierten Zeitfensters ab Betriebsbeginn des Systems 1 abgegeben wird. Das definierte Zeitfenster ist beispielsweise unter 1 min. groß.

Damit das System 1 äußerst flexibel handhabbar ist, und viele Teilnehmer über ein Handsteuergerät 32-35 am System 1 in großen Entfernungen z.B. über mehrere km verteilt teilnehmen können, ist das Verfahren derart weitergebildet, dass alle Daten des Daten-Servers 10 des Master-Netzgeräts 2 auf die Endnetzgeräte 3, 4, 5 übermittelt werden. Somit können an allen Endnetzgeräten 3, 4, 5 über Auslesevorrichtungen 36 an den Handsteuergeräten 32-35 alle Daten ausgelesen oder gegebenenfalls eingegeben und korrigiert werden.

Die Fig. 1 zeigt auch schematisch ein weiterbildendes Verfahren, wobei ein mobiles Handsteuergerät 32, 33, 34, 35 in Form eines aus dem Stand der Technik bekanntes Smartphones oder Smarttabletts mit einer Steuer- und Auslesevorrichtung 36 in das lokale Nah-Netzwerk 26-29 des jeweiligen Netzgerätes 2, 3, 4, 5 eingekoppelt wird, mit der Steuer- und Auslesevorrichtung 36 das Steuer- und Auslesemodul 8 des Netzgeräts 2, 3, 4, 5 angesprochen oder konfiguriert wird und Daten ausgelesen werden, insbesondere der Sendekanal ausgewählt oder neu eingestellt wird. Bevorzugt weist das Handsteuergerät eine weitere Schnittstelle 52, 53, 54, 55 zu einem standardisierten stationären Mobilfunk-Daten-Fernnetzwerk 50, insbesondere mit einer Verbindung zu dem Internet-Netzwerk 80, auf. Über das Mobilfunk-Daten-Fernnetzwerk 50 sind Daten bidirektional aus dem oder in das lokale Nah-Netzwerk 26, 27, 28, 29 übermittelbar. Somit lässt sich beispielsweise das Verfahren des Steuermoduls 8 des Master-Netzgeräts 2 über aus dem Internet-Netzwerk 80 geladene Daten aktualisieren, statt über die Kabelverbindung mit der USB-Schnittstelle 23.

Die Steuer- und Auslesevorrichtung 36 ist eine Anwendungs-Applikation in Form eines unten beschriebenen Computerprogrammprodukts. Somit kann ein Handsteuergerät 32 zusammen mit dem mobilen Master-Netzgerät 2 in der Tasche von einer für die Zeitmessung verantwortlichen Person mobil getragen werden. Über das lokale WLan-Nah-Netzwerk 26 kann das System 1 gesteuert werden. Es können Teilnehmer registriert werden, Daten gelöscht werden. Ferner können Daten über das Mobilfunk-Daten-Fernnetzwerk 50 bidirektional ausgetauscht und geteilt werden. Beispielsweise kann auch ein neues Steuerungsverfahren des Steuermoduls 8 oder ein neues Ausleseverfahren des Auslesemoduls 8 über das Mobilfunk-Daten-Fernnetz 50 in das Handsteuergerät 32 geladen werden und über das lokale WLan-Nah-Netzwerk übertragen werden.

Das System 1 ist somit derart ausgebildet, dass an mindestens ein Netzgerät 2, 3, 4, 5 ein Identifizierungsmodul 16 für Athleten über Schnittstellen 22 der Nah-Netzwerke 26, 27, 28, 29 koppelbar ist. Bevorzugt umfasst das Identifizierungsmodul 16 beispielsweise ein mobiles Handsteuergerät 32, 33, 34, 35 mit der Steuer- und Auslesevorrichtung 36. Mittels der Steuervorrichtung 36 können also die Athleten einem bestimmten Startzeitpunkt und Lauf zugeordnet werden. Hierfür ist das Identifizierungsmodul 16 bevorzugt im Handsteuergerät 33 in der Nähe der Startstation im Bereich des Nah-Netzwerks 27 angeordnet. Die Läufe der Athleten mit den entsprechenden Zeiten dazu können intern oder extern ausgewertet werden. Das Identifizierungsmodul 16 kann auch jede andere aus dem Stand der Technik bekannte Vorrichtung umfassen, um Athleten bestimmte Startzeitpunkte und Zielzeitpunkte zu zuordnen. Die Athleten könnten auch berührungslose Identifikationsvorrichtungen tragen, die von einer entsprechenden Vorrichtung beim Passieren detektiert werden und insgesamt das Identifizierungsmodul 16 ausbilden. Das Identifizierungsmodul 16 kann auch alternativ direkt über eine Kabelgebundene Schnittstelle 23 mit den Netzgeräten 2, 3, 4, 5 verbunden sein.

Um flexibel das System zu verbessern und an Bedürfnisse anzupassen, ist bevorzugt ein Computerprogrammprodukt vorgesehen, das in jedes Netzgerät 2, 3, 4, 5 eines oben beschriebenen Systems 1 mit einer Steuermodul und einem Auslesemodul 8 ladbar ist und mit dem ein oben beschriebenes Verfahren ausführbar ist.

Das System 1 wird vorteilhaft mit einem Computerprogrammprodukt weitergebildet, das in einen Programmspeicher eines Handsteuergeräts 32, 33, 34, 35 mit einer Steuer- und Auslesevorrichtung 36 ladbar ist, mit der ein oben beschriebenes Verfahren ausführbar ist.

Somit ist ein hochgenaues Zeitmesssystem geschaffen, das möglichst klein und leicht ist, und sich mit wenigen und klaren Handgriffen installieren lässt. Im Betrieb kann das System als Vorrichtung möglichst im Hintergrund autark laufen. Die Vorrichtung ist gleichzeitig von mehreren Personen, Trainer und Athleten, und von mehreren Standorten (Startraum, Zwischenzeit, Zielraum und mobilen Handgerät) bedienbar, um den Aufwand der Zeitmessung für eine einzelne Person möglichst gering zu halten. Das Zeitmessverfahren ist über größere Distanzen mit einem sehr hohen Auflösungsbereich einsetzbar. Der Energieverbrauch des Zeitmesssystems ist niedrig aufgrund einer geringen Datentransferrate und der Verwendung eines schmalen Frequenzbandes, sowie insbesondere des Verfahrens der Zirpenfrequenzspreizmodulation.

Die Trainer haben ihren Focus auf dem Training ihrer Athleten. Eine Zeitnahme im Training ist zwar notwendig um ein Feedback des Trainings zu bekommen, ist aber im Gegenzug aufwändig in Transport, Aufbau und Bedienung. Eine Zeitmessvorrichtung gemäß des oben beschriebenen Systems 1, ist einfach im Aufbau und möglichst autark in dem Betrieb. Sie lässt den Trainern viel Raum, um sich auf das eigentliche Training zu konzentrieren. Die Ergebnisse des Trainings lassen sich aufgrund der hierin beschriebenen Zeitmessverfahren unkompliziert exportieren und stehen leicht für eine Bearbeitung oder Weiterleitung über verschiedene Kanäle in verschiedenen Netzen, wie Internet, stationärem Mobilfunk-Daten-Fernnetz, autarkem mobilen Fernnetz und Nah-Netzwerk, zur Verfügung.

Die vorangehend beschriebenen Varianten des Verfahrens und der Vorrichtung dienen lediglich dem besseren Verständnis der Struktur, der Funktionsweise und der Eigenschaften der vorgestellten Lösung; sie schränken die Offenbarung nicht etwa auf die Ausführungsbeispiele ein. Die Fig. sind schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches / welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Lösung zuzuschreiben sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst.

Die vorstehend erläuterten Vorrichtungs- und Verfahrensdetails sind zwar im Zusammenhang dargestellt; es sei jedoch darauf hingewiesen, dass sie auch unabhängig voneinander sind und auch frei miteinander kombinierbar sind. Die in den Fig. gezeigten Verhältnisse der einzelnen Teile und Abschnitte hiervon zueinander und deren Abmessungen und Proportionen sind nicht einschränkend zu verstehen. Vielmehr können einzelne Abmessungen und Proportionen auch von den gezeigten abweichen.

Auch die Ansprüche limitieren nicht die Offenbarung und damit die Kombinationsmöglichkeiten aller aufgezeigten Merkmale untereinander. Alle aufgezeigten Merkmale sind explizit auch einzeln und in Kombination mit allen anderen Merkmalen hier offenbart.

## Patentansprüche

1. System (1), insbesondere zur hochgenauen Zeitmessung, mit mindestens zwei Netzgeräten (2, 3, 4, 5), die ein kabelloses Fernnetzwerk (6) ausbilden, wobei die Netzgeräte (2, 3, 4, 5) jeweils einen Mikrocomputer (7) mit Speicher, ein Steuer- und Auslesemodul (8) und einen Fernnetz-Sendeempfänger (9), eine quarzgesteuerte Systemuhr (12, 13, 14, 15), einen Energiespeicher (11), sowie Schnittstellen (21, 22, 23, 24) zur kabelgebundenen und kabellosen Signal- und bidirektionalen Datenübertragung und Energieübertragung (25) zum Aufladen des Energiespeichers (11) umfassen, wobei eine erste kabellose Schnittstelle (21) für das kabellose Fernnetzwerk (6) ausgebildet ist, wobei das Fernnetzwerk autark und mobil aufstellbar ausgebildet ist,.

2. System (1) nach Anspruch 1, wobei das Fernnetzwerk eigenständig mit einem Frequenzgang als Schmalband, insbesondere als Ultra-Schmalband und mit Funksignalen mit einem Verfahren einer Zirpenfrequenzspreizmodulation ausgebildet ist und eines der Netzgeräte (2) als Master-Netzgerät und Daten-Server (10) und alle weiteren Netzgeräte (3, 4, 5) als Client-Endnetzgeräte ausgebildet sind.

3. System (1) nach Anspruch 1 oder 2, wobei die Netzarchitektur des Fernnetzwerks (6) sternförmig, mit einem energiesparsamen Datenprotokoll (62, 63, 64, 65) mit einer niedrigen Datenübertragungsrate, insbesondere zwischen 292 bit/s bis 50 KBit/s, für kabellose Übertragungen mit Reichweiten über mehrere km, ausgebildet ist, insbesondere unter dem Frequenzbereich von 1 GHz, bevorzugt im Bereich von 433,05 MHz bis 928 MHz.

4. System (1) nach einem der Ansprüche 1-3, wobei ein Netzgerät (2), insbesondere das Master-Netzgerät, mobil tragbaren ausgebildet ist, und stationär aufstellbar weitere Client-Endnetzgeräte (3, 4, 5) mit jeweils einem induktivem, optischen oder elektromechanischen Signal- bzw. Datengeber als Startstation (3), Zielstation (4) und Zwischenstation (5).

5. System (1) nach einem der Ansprüche 1-4, wobei an mindestens ein Netzgerät (2, 3, 4, 5) einen Identifizierungsmodul (16) für Athleten über Schnittstellen (22, 23) koppelbar ist.

6. System (1) nach einem der Ansprüche 1-5, wobei die Netzgeräte (2, 3, 4, 5) eine zweite kabellose Schnittstelle (22) aufweisen, die als Zugangspunkt für jeweils ein eigenes lokales Nah-Netzwerk (26, 27 ,28 ,29), insbesondere mit einer Reichweite im 10-50 Meterbereich, weiterbevorzugt ein Nah-Netz-Sendeempfänger im Mikrocomputer integriert, ausgebildet ist.

7. Verfahren zum Herstellen eines Systems (1), insbesondere zur hochgenauen Zeitmessung, mit mindestens zwei Netzgeräten (2, 3, 4, 5), die ein autarkes, mobil aufstellbares, kabelloses Fernnetzwerk (6) ausbilden, wobei die Netzgeräte (2, 3, 4, 5) jeweils einen Mikrocomputer (7) mit Speicher, ein Steuer- und Auslesemodul (8) und einen Fernnetz-Sendeempfänger (9), eine quarzgesteuerten Systemuhr (12, 13, 14, 15), einen Energiespeicher (11), sowie Schnittstellen (21, 22, 23, 24) zur kabelgebundenen und kabellosen Signal- und bidirektionalen Datenübertragung umfassen, wobei das Steuermodul (8) derart eingestellt wird, das eine Reihenfolge zur Synchronisierung der Systemuhr (12, 13, 14, 15) von einem Master-Netzgerät (2) mit weiteren Endnetzgeräten festgelegt wird, wobei ein autarkes, mobil aufstellbares, kabelloses Fernnetzwerk von den mindestens zwei Netzwerkgeräten ausgebildet wird.

8. Verfahren zum Betreiben eines Systems, insbesondere zur hochgenauen Zeitmessung, mit mindestens zwei Netzgeräten, die ein sternförmiges Fernnetzwerk ausbilden, wobei die Netzgeräte jeweils einen Mikrocomputer mit Speicher, ein Steuer- und Auslesemodul und einen Fernnetz-Sendeempfänger (9), eine quarzgesteuerte Systemuhr, einen Energiespeicher, sowie Schnittstellen zur kabelgebundenen und kabellosen Signal- und bidirektionalen Datenübertragung umfassen, wobei eines der Netzgeräte als Master-Gerät mit Daten-Server (10) und alle weiteren Netzgeräte als Client-Endnetzgeräte ausgebildet sind und alle Endnetzgeräte permanent aktiv mit einem geöffneten Empfangszeitfenster betrieben werden, wobei eine Zeitsteuervorrichtung (70) integriert ist, mit der eine direktionale Datenübertragung mit einer Sendezeitlänge (62, 63, 64, 65) innerhalb eines definierten Sendefensters (72, 73, 74, 75) und einer Reihenfolge der Sendefenster der Netzgeräte (2, 3, 4, 5) permanent wiederholend durchgeführt wird und wobei ein autarkes, mobil aufstellbares, kabelloses Fernnetzwerk von den mindestens zwei Netzwerkgeräten ausgebildet wird.

9. Verfahren nach dem vorherigen Anspruch, wobei die Zeit der Systemuhr (13, 14, 15) von den Endnetzgeräten auf die Systemzeit der Systemuhr (12) vom Mastergerät synchronisiert wird, wobei insbesondere ein Übertragungszeitfehler entstehend aus Rechnerverarbeitungszeit und Funkübertragungszeit aus, vorzugsweise sechs, Wiederholungen der Synchronisierung gemittelt wird und der gemittelte Übertragungszeitfehler in die ermittelte Zeitdifferenz einbezogen wird.

10. Verfahren nach einem der vorherigen Ansprüche, wobei ein Netzgerät einer Zwischenstation (5) aus der Reihenfolge der Sendefenster (72-75) der Zeitsteuervorrichtung (70) entfernt wird, wenn keine Daten-Rückmeldung vom Netzgerät (5) der Zwischenstation an das Master-Netzgerät (2) innerhalb eines definierten Zeitfensters ab Betriebsbeginn des Systems (1) abgegeben wird.

11. Verfahren nach einem vor vorherigen Ansprüche, wobei eine Quarz-Kennlinie QK-S1 von jeder Systemuhr (13, 14, 15) in jedem Endnetzgerät (3, 4, 5) mit der Quarz-Kennlinie QK-M1 der Systemuhr (12) des Master-Netzgeräts (2), insbesondere nach einer definierten Betriebszeit des Systems (1), weiterbevorzugt nach 10 min. Betriebszeit, in definierten Intervallen, insbesondere von 1 min., kalibriert wird.

12. Verfahren nach einem der vorherigen Ansprüche, wobei alle Daten des Daten-Servers (10) des Master-Netzgeräts auf die Endnetzgeräte übermittelt werden.

13. Verfahren nach einem der vorherigen Ansprüche, wobei ein mobiles Handsteuergerät (32, 33, 34, 35) mit einer Steuer- und Auslesevorrichtung (36) in das lokale Netzwerk (26, 27, 28, 29) des jeweiligen Netzgerätes (2, 3, 4, 5) eingekoppelt wird, mit der Steuer- und Auslesevorrichtung (36) das Steuer- und Auslesemodul (8) angesprochen oder konfiguriert wird und Daten ausgelesen werden, insbesondere der Sendekanal ausgewählt oder neu eingestellt wird, sowie insbesondere das Handsteuergerät eine weitere Schnittstelle (52, 53, 54, 55) zu einem stationären Mobilfunk-Daten-Fernnetzwerk (50), gekoppelt insbesondere mit dem Internet-Netzwerk (80), aufweist, über das Daten bidirektional aus dem oder in das lokale Nah-Netzwerk (26, 27, 28, 29) übermittelt werden.

14. Computerprogrammprodukt, das in jedes Netzgerät (2, 3, 4, 5) eines Systems (1) nach einem der Ansprüche 1 bis 6 mit einem Steuermodul und einem Auslesemodul (8) ladbar ist und mit dem ein Verfahren nach einem der Ansprüche 8 bis 13 ausführbar ist.

15. Computerprogrammprodukt, das in einen Programmspeicher eines Handsteuergeräts (32, 33, 34, 35) mit einer Steuer- und Auslesevorrichtung (36) ladbar ist, mit der ein Verfahren nach Anspruch 13 ausführbar ist.
